# EUROPEAN PATENT SPECIFICATION

(11) **EP 2 877 779 B1**
(45) Date of publication and mention of the grant of the patent: **06.05.2020**
(21) Application number: 13823052.9
(22) Date of filing: 26.07.2013
(51) Int. Cl.: F21V 31/00, F21V 17/00, F21V 29/00

(54) **INTEGRAL CONDUIT MODULAR LIGHTING**
INTEGRIERTE MODULARE LEITUNGSBELEUCHTUNG
ÉCLAIRAGE MODULAIRE À CONDUIT INTÉGRÉ

(30) Priority: 26.07.2012 US 201261675859 P
(43) Date of publication of application: 03.06.2015
(73) Proprietor: Signify North America Corporation, Somerset, NJ 08873 (US)
(72) Inventor: GRAJCAR, Zdenko, Orono , Minnesota 55359 (US)
(74) Representative: Verweij, Petronella Daniëlle
(86) International application number: PCT/US2013/052235
(87) International publication number: WO 2014/018846

(56) References cited:
- EP-A1- 2 383 508
- WO-A1-2009/077177
- KR-A- 20100 108 797
- KR-A- 20120 031 277
- US-A1- 2007 041 220
- US-A1- 2011 204 780
- US-A1- 2011 241 559
- US-A1- 2011 241 559
- US-A1- 2012 008 331

## Description

### BACKGROUND

This disclosure relates to lighting assemblies. More specifically this disclosure relates to methods and apparatus involving lighting integrated with a conduit.

Lighting can be an important consideration in some applications. In commercial or residential lighting, for example, various types of lighting systems have been commonly used for general illumination. For example, common lighting systems that have been used include incandescent or fluorescent lamps.

More recently, LEDs (light emitting diodes) are becoming widely used devices capable of illumination when supplied with current. Typically, an LED is formed as a semiconductor diode having an anode and a cathode. In theory, an ideal diode will only conduct current m one direction. When sufficient forward bias voltage is applied between the anode and cathode, conventional current flows through the diode. Forward current flow through an LED may cause photons to recombine with holes to release energy in the form of light.

The emitted light from some LEDs is in the visible wavelength spectrum.
By proper selection of semiconductor materials, individual LEDs can be constructed to emit certain colors (e.g., wavelength), such as red, blue, or green, for example.

In general, an LED may be created on a conventional semiconductor die. An individual LED may be integrated with other circuitry on the same die, or packaged as a discrete single component. Typically, the package that contains the LED semiconductor element will include a transparent window to permit the light to escape from the package.

As the cost of manufacturing LED lighting assemblies continues to decrease, real world applications increase. For example, LED lighting assemblies are beginning to be used in barn settings were preexisting electrical conduits exist to provide lighting from more traditional lighting assemblies. There is a need for LED lighting assemblies that will attach and connect to preexisting electrical conduits such that the lighting assemblies may easily replace existing lighting. Further a need exists for such lighting assemblies to be water tight for high pressure cleaning operations that occur in such facilities.

Therefore a principle object of the present disclosure is to provide an integral conduit modular lighting assembly that is interchangeable with preexisting electrical conduit;

Another object of the present disclosure is to reduce manufacturing costs associated with making an integral conduit modular lighting assembly.

US 2011/0204780 A1 discloses a method for forming a light source including receiving an LED light module having a plurality of LEDs on a silicon substrate coupled to a flexible printed circuit and bonding the LED light module directly to a heat-sink with a thermal adhesive.

US 2011/0241559 A1 discloses an apparatus and associated methods involving a light module adapted to mount to an open face of a conduit body. The light module may include an electrical interface for making operative electrical connection to conductors disposed within the conduit body.

### BRIEF SUMMARY OF THE INVENTION

An invention is set out in the independent claims. In an aspect of the disclosure, an integral conduit modular lighting system that has a light board having circuitry that is secured to a heat sink with an adhesive layer. The heat sink not only provides heat conveying advantages, but also provides surfaces for the adhesive layer and a gasket in order to securely connect the lighting system to a preexisting conduit body such that the lighting system will withstand a high pressure wash without leakage to the board. Further the lighting system is adapted to attach to preexisting electrical conduit bodies to provide easy and inexpensive installation of the modular lighting system.

### BRIEF DESCRIPTION OF THE DRAWINGS

Fig. 1 is a perspective view of an illustrative free range-style chicken coop installation with an exemplary embodiment of an integral conduit modular (ICM) lighting system;
Fig. 2 is a front perspective view of an integral conduit modular lighting system with the lens removed;

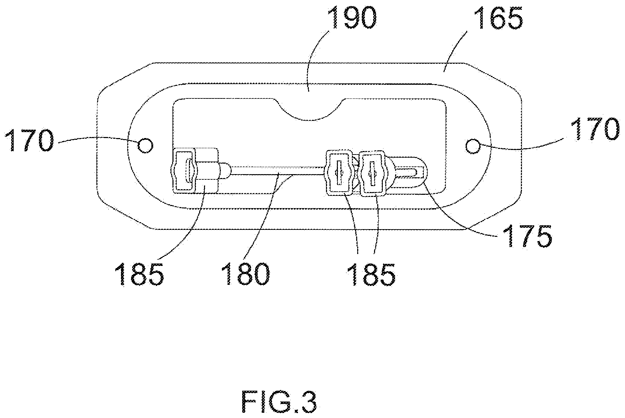

Fig. 3 is a back perspective view of an integral conduit modular lighting system;
Fig. 4 is a schematic circuit diagram of an integral conduit modular lighting system;

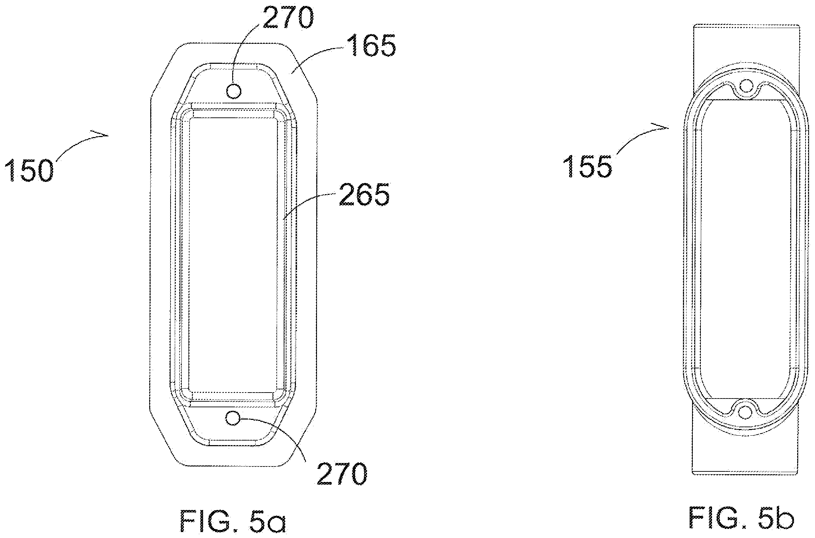

Fig. 5A is a front plan view of an integral conduit modular lighting system;
Fig. 5B is a front plan view of a conduit body and integral conduit modular lighting system;

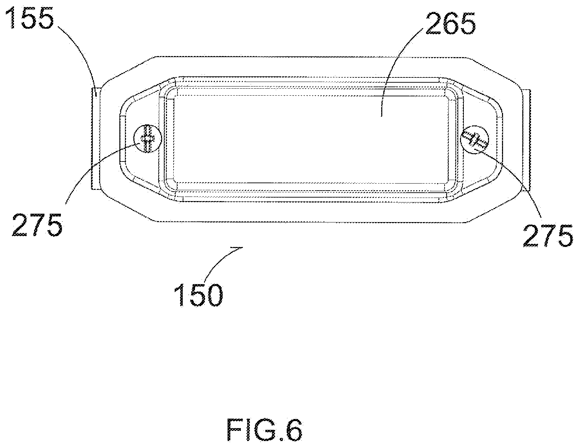

Fig. 6 is a front plan view of an integral conduit modular lighting system secured to a conduit body; and

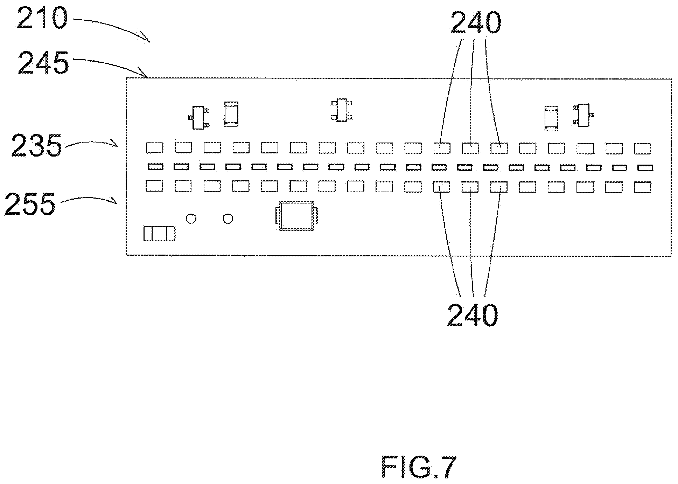

Fig. 7 is a front plan view of a substrate having electrical components thereon.

### DETAILED DESCRIPTION OF A PREFERRED EMBODIMENT OF THE INVENTION

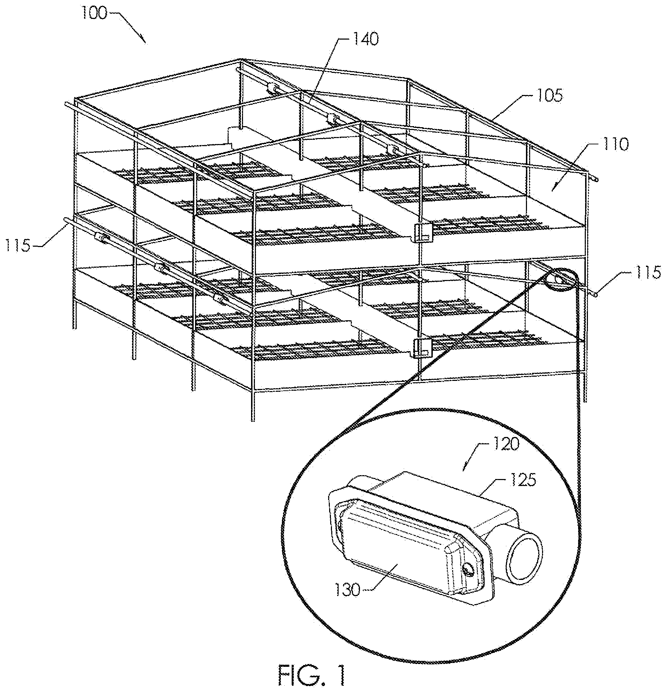

FIG. 1 shows a perspective view of an illustrative free range-style chicken coop installation with an exemplary embodiment of an integral conduit modular (ICM) lighting system. In this example, a coop installation 100 includes a frame 105 and a number of bays 105 disposed on rows of three bays on both a lower level and an upper level. In an illustrative example of egg production, a number of chickens may spend at least part of their time in the bays where they may receive food, air, water, and they may also deposit eggs. In some coop installations, the eggs may roll down a ramp (not shown) to an egg collection/conveyer system (not shown).

On the lower level of the coop installation 100, an interior volume of each of the bays 110 is illuminated by an integral conduit modular lighting system that includes sections of electrical conduit 115 connected to corresponding ports of a number of integral light modules (ILMs) 120. Each of the ILMs 120 includes a conduit body 125 and a light engine 130 attached to an open longitudinal face of the conduit body 125. For the depicted lower level of bays 110, the conduit 115 and ILMs 120 are positioned to direct from a peripheral position outside the frame 105 and toward a central midline of the coop installation 100. The ILMs 120 are positioned substantially in an upper portion of the bays 110 of the lower level to promote sufficient illumination of the water and feed facilities within each of the bays 105. The ILM 120 may advantageously provide substantial illumination of food and water access facilities in the bays 110 while the bays are substantially populated with chickens.

By way of example, and not limitation, and in various implementations, the conduit 115 and/or the conduit body 125 may be of a standard or conventional type which may be used by electricians, for example, to install electrical wiring. In the depicted example, the conduit body 125 may be of the typei of conduit body for rigid conduit that is commercially available in standard sizes, for example, from Thomas & Betts Corporation of Tennessee.

On the upper level of the coop installation 100, an interior volume of each of the bays 110 is illuminated by an integral conduit modular lighting system that includes sections of electrical conduit 140 connected to corresponding ports of a number of integral light modules (ILMs) 150. Each of the ILMs 150 includes a conduit body 155 and oppositely directed light engines 160a, 160b attached to opposing open longitudinal faces of the conduit body 155. For the depicted upper level of bays 110, the conduit 140 and the ILMs 150 are positioned to direct light outward from a central position along the midline of the coop installation 100. Each of the ILMs 150 in the upper level are positioned substantially in an upper portion of the bays 110 to provide sufficient illumination of the water and feed facilities within the bays 110 on either side of the midline of the coop installation 100. The ILM 150 may advantageously provide substantial illumination of food and water access facilities in the bays 110 while the bays are substantially populated with chickens.

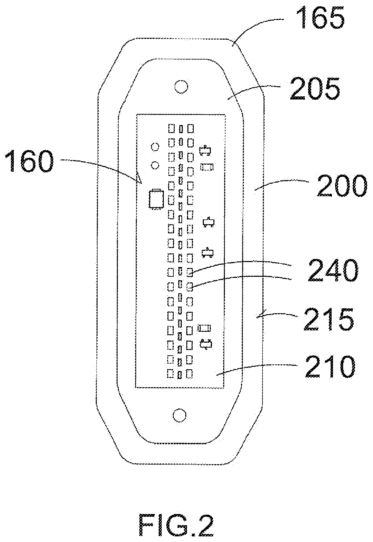

In one embodiment as best shown in Fig. 2 the ILM 150 includes a light engine 160 that has a heat sink 165 that in one embodiment is a a sheet of metal where first openings 170 are disposed through the heat sink 165 to align with openings on the conduit body 155. A second opening 175 is also disposed through the heat sink 165 to provide a pathway for wire connectors 180 that can include leads 185 for electrical connection to wiring within the conduit 140 to power the ILM 150.

A gasket 190 is secured to a first side 195 of the heat sink 165 and is of size and shape to mate with the perimeter of the conduit body 155. In this manner a sealing connection is formed between the ILM 150 and conduit body 155 when fasteners are used to secure the ILM 150 to the conduit. Specifically the gasket 190 is made of a flexible material that deforms when pressed against the conduit body 155 to form a water tight seal between the heat sink 165 and conduit body 155.

On a second side 200 of the heat sink 165 an adhesive layer 205 is provided that in a preferred embodiment is a heat conducting epoxy that not only adheres or secures a light board 210 to the heat sink 165, but also conveys heat from the light board 210 to the heat sink 165. The adhesive layer 205 can be any size and can be of size and shape to have openings disposed therethrough to accommodate fasteners used to connect the ILM 150 to the conduit body 155.

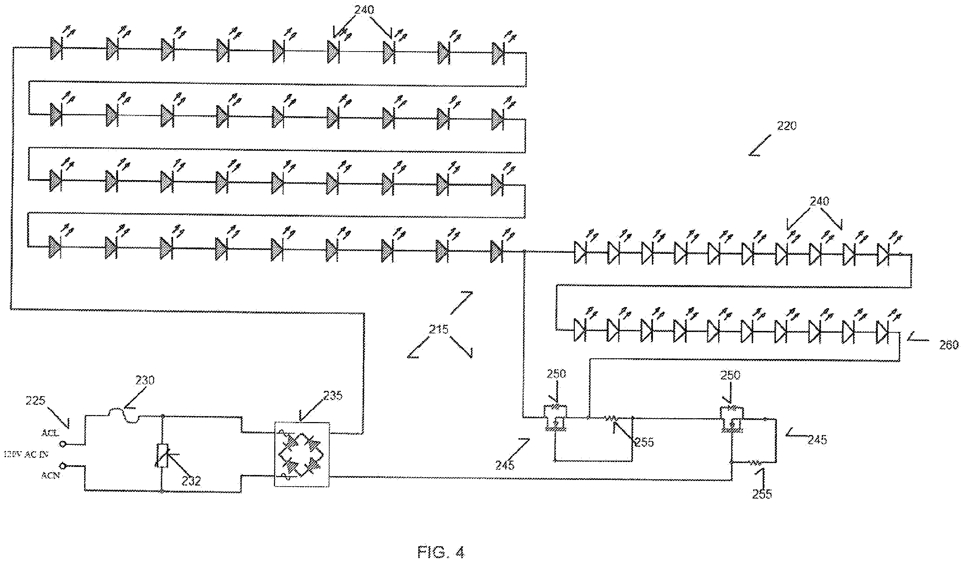

The light board 210 is a substrate that can be made out of any material including ceramic material or can also be a PCB, present a semiconductor die or the like such that the substrate can hold and electrically connect a plurality of electrical components 215. These electrical components 215 are best shown in the circuit diagram of Fig. 4.

In particular the circuit 220 on the board 210 receives power from an AC input 225. A fuse 230 is provided for circuit protection along with a metal-oxide varistor (MOV) 232 or zener diode before the AC current flows to a rectifier 235. Once rectified that current flow to a plurality of LEDs 240 and driving elements 245 such as transistors 250 used in combination with resistors 255 to form a bypass circuit 260 to control the operation of the LEDs 240. In one embodiment the transistors are MOSFETs, while in other embodiments the transistors are IGFETs or other similar transistors known in the art. In this embodiment the electrical components 215 are arranged as shown in Fig. 2 with the plurality of LEDs 240 centrally located on the board 210 with other electrical components 215 such as the rectifier 235 and driving elements 245 on the perimeter of the board 210 surrounding the LEDs to provided enhanced lighting diffusion.

A lens element 265 is secured to the adhesive layer 205 and surrounds the board 210. In this manner the lens 265 provides additional water tight protection to the board 210 to ensure the circuitry 220 on the board does not get wet during high pressure cleaning of the lighting as is common in an agricultural or barn setting. In addition the lens 265 is made of a transparent material to allow the light from the LEDs to be diffused throughout the dwelling or area containing the lighting assembly. In one embodiment the lens 265 is made of a plastic material. The lens 265 also has openings 270 disposed therethrough that align with the openings in the adhesive layer 205, heat sink 165 and conduit body 155 so that fasteners 275 can be used to secure the ILM 150 to the conduit body 155.

Thus provided is a ILM 150 that is easy and inexpensive to manufacture. The ILM can be used to replace existing lighting in dwellings such as barns or other agricultural dwellings by using existing electrical conduits 115. Specifically, the ILM 150 has wire connectors 180 that connect to the existing conduit wiring and a structure designed to sealing secure to an existing conduit body 155. In particular, as a result of the use of a gasket 190, adhesive layer 205 and lens 265 the board 210 is sealed from exterior conditions preventing shortages when the ILMs 150 are washed with high pressure water. Thus, at the very least all of the objects have be met.

## Claims

1. A device for illumination, comprising:
a conduit body (155);
a light board (210);
electrical circuitry (220) on the light board, the light board having a first side (195) and a second side (200) defining opposing planar surfaces;
a light engine module comprising an array of light sources arranged on the first side of the light board with driving circuitry (220) configured to supply electrical excitation to the array of light sources, said second side engaging an adhesive layer (205) to secure the light engine module to a heat sink (165);
a gasket (190) secured to the heat sink, wherein when the light engine module is securely mounted to the conduit body the gasket engages the conduit body to prevent water from entering the conduit body; and
a lens module (265) having an interior lens surface engaged and secured to the adhesive layer to provide a water tight seal to prevent the entry of water onto the light board and onto the electrical circuitry.

2. The device of claim 1 further comprising at least one mounting hole for securely mounting the light engine module in a fixed position relative to the conduit body.

3. The device of claim 1, wherein the conduit body comprises an industry standard electrical junction box.

4. The device of claim 1, wherein the electrical excitation signals comprise an alternating current (AC) signal.

5. The device of claim 1 wherein the array of light sources are light emitting diodes.

6. The device of claim 1 wherein the light board is a printed circuit board.

7. A method of installing a device for illumination in a chicken coop installation (100) to prevent the flow of water within the device, the method comprising:
providing an electrical conduit (115) connected to corresponding ports of an integral light module (120) having a conduit body (125), said integral light module further comprising an array of light sources arranged on a light board (210) having a first side (195) and a second side (200) defining opposing planar surfaces;
adhering the light board to a heat sink (165) with an adhesive layer (205);
securing a gasket (190) to a side of the heat sink opposite the light board;
securing a lens (265) to the heat sink against the adhesive layer to seal the light board from water; and
mounting the heat sink to the conduit body to prevent water from entering the conduit body.

8. The method of claim 7 further comprising the step of pressing the gasket against the conduit body to provide a water tight seal.

9. The method of claim 8 wherein the gasket is made of a flexible material that deforms when the gasket is pressed against the conduit body.

10. The method of claim 8 wherein the array of light sources are light emitting diodes.

## Patentansprüche

1. Beleuchtungsvorrichtung, umfassend:
einen Leitungskörper (155);
eine Lichtplatte (210);
eine elektrische Schaltung (220) auf der Lichtplatte, wobei die Lichtplatte eine erste Seite (195) und eine zweite Seite (200) aufweist, die gegenüberliegende ebene Oberflächen definieren;
ein Lichtmaschinenmodul, das eine Anordnung von Lichtquellen umfasst, die auf der ersten Seite der Lichtplatte mit einer Antriebsschaltung (220), die konfiguriert ist, um die Anordnung von Lichtquellen mit elektrischer Erregung zu versorgen, angeordnet ist, wobei die zweite Seite mit einer Klebeschicht (205) in Eingriff steht, um das Lichtmaschinenmodul an einer Wärmesenke (165) zu befestigen;
eine Dichtung (190), die an der Wärmesenke befestigt ist, wobei, wenn das Lichtmaschinenmodul sicher an dem Leitungskörper montiert ist, die Dichtung mit dem Leitungskörper in Eingriff steht, um zu verhindern, dass Wasser in den Leitungskörper eintritt; und
ein Linsenmodul (265), dass eine innere Linsenoberfläche aufweist, die mit der Klebeschicht in Eingriff steht und an dieser befestigt ist, um eine wasserdichte Abdichtung bereitzustellen, um den Eintritt von Wasser auf die Lichtplatte und auf die elektrische Schaltung zu verhindern.

2. Vorrichtung nach Anspruch 1, weiter umfassend zumindest ein Befestigungsloch zum sicheren Montieren des Lichtmaschinenmoduls in einer festen Position in Bezug auf den Leitungskörper.

3. Vorrichtung nach Anspruch 1, wobei der Leitungskörper einen elektrischen Anschlusskasten gemäß Industriestandard umfasst.

4. Vorrichtung nach Anspruch 1, wobei die elektrischen Erregungssignale ein Wechselstromsignal (AC-Signal) umfassen.

5. Vorrichtung nach Anspruch 1, wobei die Anordnung von Lichtquellen Licht emittierende Dioden sind.

6. Vorrichtung nach Anspruch 1, wobei die Lichtplatte eine Leiterplatte ist.

7. Verfahren zum Installieren einer Beleuchtungsvorrichtung in einer Hühnerstallinstallation (100), um das Fließen von Wasser innerhalb der Vorrichtung zu verhindern, wobei das Verfahren umfasst:
Bereitstellen einer elektrischen Leitung (115), die mit entsprechenden Anschlüssen eines integralen Lichtmoduls (120), das einen Leitungskörper (125) aufweist, verbunden ist, wobei das integrale Lichtmodul weiter eine Anordnung von Lichtquellen umfasst, die auf einer Lichtplatte (210) angeordnet sind, die eine erste Seite (195) und eine zweite Seite (200) aufweist, die gegenüberliegende ebene Oberflächen definieren;
Kleben der Lichtplatte mit einer Klebeschicht (205) an eine Wärmesenke (165);
Befestigen einer Dichtung (190) an einer Seite der Wärmesenke, die der Lichtplatte gegenüberliegt;
Befestigen einer Linse (265) an der Wärmesenke gegen die Klebeschicht, um die Lichtplatte gegen Wasser abzudichten; und
Montieren der Wärmesenke an dem Leitungskörper, um Wasser am Eintreten in den Leitungskörper zu hindern.

8. Verfahren nach Anspruch 7, weiter umfassend den Schritt des Pressens der Dichtung gegen den Leitungskörper, um eine wasserdichte Abdichtung bereitzustellen.

9. Verfahren nach Anspruch 8, wobei die Dichtung aus einem flexiblen Material gefertigt ist, das sich verformt, wenn die Dichtung gegen den Leitungskörper gepresst wird.

10. Verfahren nach Anspruch 8, wobei die Anordnung von Lichtquellen Licht emittierende Dioden sind.

## Revendications

1. Dispositif d'éclairage comprenant :
un corps de conduit (155) ;
un panneau lumineux (210) ;
un circuit électrique (220) sur le panneau lumineux, le panneau lumineux ayant une première face (195) et une seconde face (200) définissant des surfaces planaires opposées ;
un module moteur de lumière comprenant un réseau de sources de lumière agencées sur la première face du panneau lumineux avec un circuit de commande (220) configuré pour fournir une excitation électrique au réseau de sources de lumière, ladite seconde face recevant une couche adhésive (205) pour fixer le module moteur de lumière à un puits de chaleur (165) ;
un joint étanche (190) fixé au puits de chaleur, dans lequel, lorsque le module moteur de lumière est monté fixe sur le corps de conduit, le joint étanche s'applique au corps de conduit pour empêcher l'eau de pénétrer dans le corps de conduit ; et
un module de lentille (265) ayant une surface de lentille intérieure appliquée et fixée sur la couche adhésive pour fournir un joint imperméable à l'eau afin d'empêcher l'entrée d'eau sur le panneau lumineux et sur le circuit électrique.

2. Dispositif selon la revendication 1, comprenant en outre au moins un trou de montage pour monter solidement le module moteur de lumière en position fixe par rapport au corps de conduit.

3. Dispositif selon la revendication 1, dans lequel le corps de conduit comprend une boîte de jonction électrique standard industrielle.

4. Dispositif selon la revendication 1, dans lequel les signaux d'excitation électrique comprennent un signal de courant alternatif (CA).

5. Dispositif selon la revendication 1, dans lequel le réseau de sources de lumière est formé de diodes électroluminescentes.

6. Dispositif selon la revendication 1, dans lequel le panneau lumineux est un panneau de circuits imprimés.

7. Procédé d'installation d'un dispositif d'éclairage dans une installation de poulailler (100) pour empêcher l'écoulement d'eau dans le dispositif, le procédé comprenant :
la fourniture d'un conduit électrique (115) connecté à des parties correspondantes d'un module lumineux intégré (120) ayant un corps de conduit (125), ledit module lumineux intégré comprenant en outre un réseau de sources de lumière agencées sur un panneau lumineux (210) ayant une première face (195) et une seconde face (200) définissant des surfaces planaires opposées ;
l'adhérence du panneau lumineux à un puits de chaleur (165) avec une couche adhésive (205) ;
la fixation d'un joint étanche (190) à une face du puits de chaleur opposée au panneau lumineux ;
la fixation d'une lentille (265) au puits de chaleur contre la couche adhésive pour étancher le panneau lumineux de l'eau ; et
le montage du puits de chaleur au corps de conduit pour empêcher l'eau de pénétrer dans le corps de conduit.

8. Procédé selon la revendication 7, comprenant en outre l'étape de pression du joint étanche contre le corps de conduit pour fournir un joint imperméable à l'eau.

9. Procédé selon la revendication 8, dans lequel le joint étanche est constitué d'un matériau souple qui se déforme lorsque le joint étanche est pressé contre le corps de conduit.

10. Procédé selon la revendication 8, dans lequel le réseau de sources de lumière est formé de diodes électroluminescentes.
